# EUROPEAN PATENT SPECIFICATION

(11) **EP 2 587 777 B1**
(45) Date of publication and mention of the grant of the patent: **10.09.2014**
(21) Application number: 12194337.7
(22) Date of filing: 05.06.2009
(51) Int. Cl.: H04M 3/42, H04L 29/06, H04M 3/02

(54) **Method and system for implementing color ring back tone and multimedia ring alert tone service.**
Verfahren und System zur Implementierung eines Farb-Rückrufton- und Multimedia-Rufalarmtondienstes
Procédé et système pour mettre en oeuvre une tonalité de retour d'appel de couleur et un service de tonalité d'alerte multimédia

(30) Priority: 26.06.2008 CN 200810126109
(43) Date of publication of application: 01.05.2013
(62) Divisional of application: 09768749.5
(73) Proprietor: ZTE Corporation, Shenzhen city, Guangdong 518057 (CN)
(72) Inventor: Xie, Zhenhua, Shenzhen City Guangdong 518057 (CN)
(74) Representative: Lampis, Marco

(56) References cited:
- JINKYUNG HWANG KT KOREA: "Output draft recommendation of Q.CRBT_CRT;TD 720 (GEN/11)", ITU-T DRAFTS ; STUDY PERIOD 2005-2008, INTERNATIONAL TELECOMMUNICATION UNION, GENEVA ; CH, vol. Study Group 11 ; 2, 3/11, 21 January 2008 (2008-01-21), pages 1-42, XP017515629,

## Description

### Technical Field

The present invention relates to the field of communication, and in particular, to a method and a system for implementing Color Ring Back Tone (CRBT) and Color Ring Tone (CRT) services. The document, JINKYUNG HWANG KT KOREA: "Output draft recommendation of Q.CRBT_CRT; TD 720 (GEN/11)", ITU-E DRAFTS; STUDY PERIOD 2005-2008, INTERNATIONAL TELECOMMUNICATION UNION, GENEVA; CH, vol. Study Group 11; 2, 3/11, 21 January 2008 (2008-01-21), pages 1-42, XP017515629, [retrieved on 2008-01-21], has disclosed the related art of the present invention.

### Background Art

IP (Internet Protocol) Multimedia Core Network Subsystem (IMS) is an IP-based network architecture proposed by the 3rd Generation Partnership Project (3GPP), IMS constructs an open and flexible service environment, supports application of multimedia, and can provide various multimedia services for users.

In an IMS service system, a control layer is separated from a service layer and does not provide any specific service, but only provides necessary functions such as triggering, routing, charging and so on for the service layer. The service triggering and controlling function in the control layer is implemented by a Call Session Control Function (CSCF). CSCF is divided into three types, namely Proxy CSCF (P-CSCF), Interrogating CSCF (I-CSCF) and Serving CSCF (S-CSCF), wherein Serving CSCF takes main responsibilities while Interrogating CSCF is optional. A service layer consists of a series of Application Servers (ASs) and can provide specific services. The controller layer (S-CSCF) controls triggering of services according to the subscription information of a user, invokes the services on the ASs and achieves service functions. The ASs and S-CSCF can be referred to as servers collectively. The end-to-end equipment in a session is called as a User Equipment (UE), which is responsible for interacting with the user. These functional entities communicate with each other using SIP (Session Initiation Protocol). In services requiring display of multimedia information, participation of Media Resource Function (MRF) is needed. MRF is also called as a media server, which includes a control part MRFC and a media processing part MRFP, wherein, the control part is responsible for translating and interpreting the SIP signaling of the server into an instruction on MRFP, or reversely translating and interpreting an answer of the MRFP into a SIP signaling sent to the server; while the processing part is responsible for sending and receiving media streams.

The final purpose of a session is to achieve media connection. Therefore, media resource information needs to be negotiated in a session. The protocol for negotiating media resource information in an IMS system is SDP (Session Description Protocol) and the interaction mode of the protocol is a request-answer mode, i.e., a SDP offer must have a SDP answer. The content of a SDP offer and that of a SDP answer are both media resource information including media owner's information (including address information), media connection address, media type and media port related to the media type as well as codec information, etc. The number, type and order of the media in the content of a SDP answer must be exactly the same with the number, type and order of the media in a SDP offer. The content of SDP is carried by the message body of a SIP message, and the process of interaction is independent from the request-answer mode of SIP, i.e., a request or answer message of SIP may carry a SDP offer or a SDP answer, or may not carry the content of SDP.

There are also two types of media connection, one is normal media connection and the other is early media connection. Normal media connection refers to a media connection where media data can only be transmitted after the user responds to the SIP call originating request, while early media connection refers to a media connection where media data can be transmitted before the user responds to the SIP call originating request. The content of SDP offer and answer for negotiating a normal media connection is referred as a normal media SDP, while the content of SDP offer and answer for negotiating an early media connection is referred as an early media SDP.

The service of playing multimedia information for the caller at the meantime of establishing a call is a service in IMS, and this service is also called as a Color Ring Back Tone (CRBT) service, which allows playing of multimedia information customized by the called party beforehand for the calling party during the process of calling; the service of playing multimedia information for the called party at the meantime of establishing a call is a service in IMS, and this service is also called as a Color Ring Tone (CRT) service, which allows playing of multimedia information customized by the calling party beforehand for the called party during the process of calling. After the called party responds, the CRBT and CRT services stop playing the multimedia information that has not stopped. CRBT service and CRT service may also be called as an early media service collectively.

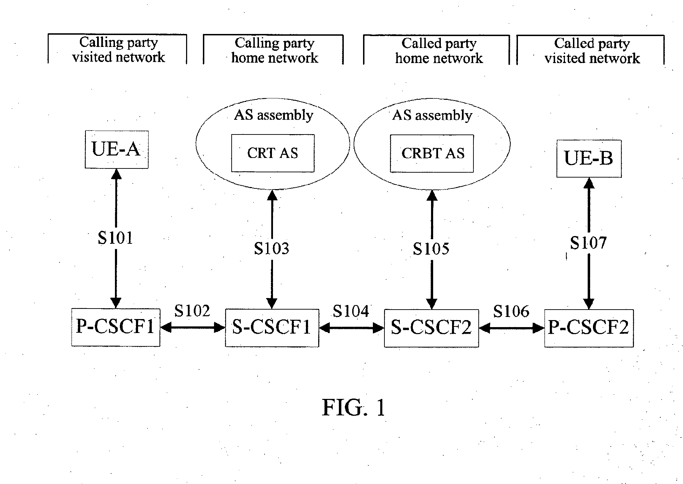

FIG. 1 illustrates the network structure of the existing CRBT and CRT services, showing the relationships among a calling user equipment UE-A, a called user equipment UE-B and various network elements in the network, as well as the process of message routing. The description for them is as follows:
S101, UE-A accessing P-CSCF1 of a visited network in the visited network, forwarding SIP messages sent by UE-A through P-CSCF1, and receiving the SIP messages sent to UE-A from P-CSCF1;
S102, P-CSCF1 of the visited network sending a message sent out by the calling party to S-CSCF1 of the home network of the calling party, and receiving a SIP message sent to UE-A from S-CSCF1, then sending the message to UE-A;
S103, S-CSCF1 forwarding the message sent out by the calling user to a certain AS in a service platform (i.e., AS assembly) of the calling user according to service customization of the calling user or a specific route next hop in the message sent by the calling user (this process is called as service triggering), wherein the service platform generally has a plurality of ASs, and only the related CRT AS is shown here; a certain AS of the service platform receiving a message sent by S-CSCF1, executing corresponding service logic, then forwarding the processed message to S-CSCF1, the calling party UE-A being called as a service serving user of the AS of the triggered service.

If there are a plurality of calling services, S-CSCF1 will continue to send the message to the corresponding AS of the service platform, therefore, S103 will be executed repeatedly until the services specified by the calling party have all been implemented.

After S-CSCF1 receives a SIP message returned by the home network of the calling party, it sends the message to the AS which is the last to trigger the service and receives the SIP message sent back by the AS, and then sends the message received from the service platform to the AS which is the last but one to trigger the service, repeating this process until receiving the SIP message sent back by the AS triggering the service from the very beginning and sends the message back to P-CSCF1 of the visited network of the calling party, in other words, the SIP message sent back by the home network of the called party is transmitted in a path reverse to that of service triggering.

S104, after completing triggering of all services of the calling party, S-CSCF1 sending the message sent out by the service platform of the calling party to S-CSCF2 of the home network of the called party, and receiving a returned SIP message from S-CSCF2;
S105, S-CSCF2 forwarding the message sent out by the called user to a certain AS in a service platform (i.e., AS assembly) of the called user according to service customization of the called user or a specific route next hop in the message sent by the called user (this process is called as service triggering), wherein the service platform generally has a plurality of ASs, and only the related CRBT AS is shown here; a certain AS of the service platform receiving a message sent by S-CSCF2, executing corresponding service logic, then forwarding the processed message to S-CSCF2, the called party UE-B being called as a service serving user of the AS of the triggered service.

If there are a plurality of called services, S-CSCF2 will continue to send the message to the corresponding AS of the service platform, therefore, S105 will be executed repeatedly until the services specified by the called party have all been implemented.

After S-CSCF2 receives a SIP message returned by the visited network of the called party, it sends the message to the AS which is the last to trigger the service and receives the SIP message sent back by the AS, and then sends the message received from the service platform to the AS which is the last but one to trigger the service, repeating this process until receiving the SIP message sent back by the AS triggering the service from the very beginning and sends the message back to S-CSCF1 of the home network of the calling party, in other words, the SIP message sent back by the visited network of the called party is transmitted in a path reverse to that of service triggering;
S106, after completing triggering of all services of the calling party, S-CSCF2 finding out P-CSCF2 of the visited network of the called party and sending the message sent out by the calling party to P-CSCF2, and receiving a SIP message returned by the called party at P-CSCF2;
S107, P-CSCF2 forwarding the message sent to the called party by the home network of the called party to UE-B, receiving a SIP message returned by UE-B, and then forwarding the SIP message to S-CSCF2 of the home network of the called party.

In FIG. 1, the CRT AS is in the home network of the calling party, while the CRBT AS is in the home network of the called party, but CRT AS may also be in the home network of the called party so as to serve the called party and play for the called party CRT media information specified by the called party; whereas CRBT AS may also be in the home network of the calling party so as to serve the calling party and play for the calling party CRBT media information specified by the calling party.

The CRBT/CRT ASs and S-CSCF are shown as one entity in the subsequent flow for the purpose of brief depiction, and the interaction therebetween is a standard flow; and since P-CSCF is only responsible for forwarding messages, it is also omitted in the flow chart.

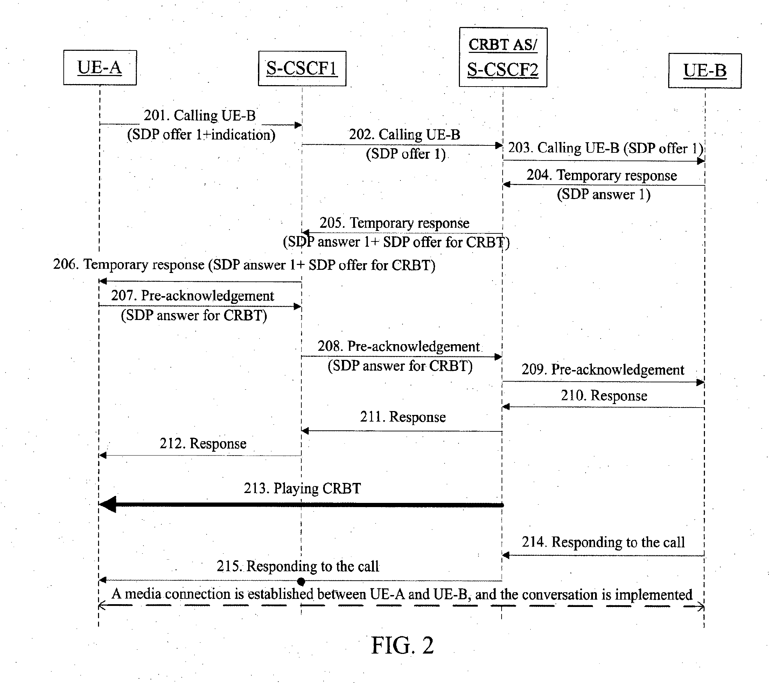

FIG. 2 illustrates the basic flow of messaging in a CRBT service according to the prior art, depicting a process of a calling party calling a called party and a CRBT server playing CRBT for the calling party during a call. The process is as follows:
Steps 201-202, UE-A sending a call originating request carrying a SDP offer 1 necessary for a call service, for example an INVITE message, to UE-B, the SDP offer 1 is carried in the message body as a session type, the message is forwarded to the CRBT AS via S-CSCF1 and S-CSCF2; in addition, if UE-A supports CRBT service, then an indication of supporting SDP for CRBT service is carried in the message;
Step 203, the CRBT AS forwarding the call originating request message to UE-B, wherein the message reaches UE-B via S-CSCF2;
Step 204, the called UE-B receiving the call message, sending a temporary response message to the calling party, for example, sending a "183 Session Progress" message, and carrying in the message body a SDP answer 1 of UE-B necessary for a call service as a session type, wherein the temporary response message reaches the CRBT AS via S-CSCF2;
Steps 205-206, the CRBT AS executing the CRBT service specified by the called party, playing CRBT information for the calling party, and acquiring from the indication carried in step 202 that UE-A supports CRBT service, then adding a SDP offer for CRBT in the temporary response message body as an early-session type, and forwarding it to UE-A, wherein the message reaches UE-A via S-CSCF2 and S-CSCF1;
Steps 207-208, upon receiving the temporary response message, UE-A completing negotiation of conversion media according to the SDP answer 1 of UE-B in the temporary response message, and sending a pre-acknowledgement message, for example, sending a PRACK message, carrying a SDP answer for CRBT of UE-A in message body as an early-session type, wherein the message reaches the CRBT AS via S-CSCF1 and S-CSCF2;
Step 209, upon receiving the PRACK message, the CRBT AS completing negotiation of CRBT media according to the SDP answer for CRBT in the PRACK message, deleting the SDP answer for CRBT from the PRACK message, and then forwarding the PRACK message to the called UE-B, wherein the message reaches UE-B via S-CSCF2;
Steps 210-212, upon receiving the PRACK message, UE-B sending a response message, for example, sending a "200 OK" message, wherein the message reaches UE-A via S-CSCF2, CRBT AS, S-CSCF2 and S-CSCF1;
Step 213, the CRBT AS playing CRBT media information for UE-A;
Step 214, UE-B responding to the call and sending a response message, for example, sending a "200 OK" message, wherein the message reaches CRBT AS via S-CSCF2;
Step 215, CRBT AS stopping playing CRBT media information, and then forwarding the response message, wherein the message reaches UE-A via S-CSCF2 and S-CSCF1;

A media connection has been established between UE-A and UE-B by now, and the conversation commences.

Implementation of CRT service is the same with this example, except that UE-B needs to inform the network of its indication of supporting SDP for CRT service, and performing resource information negotiation of two media connections at the same time, and then the network plays media information for UE-B. The specific flow will not be described here.

The defect of this technique is that: the user equipment (UE) needs to identify two different types of SDP messages in the message (step 206), and must perform request/answer processing respectively so as to establish two media connections simultaneously in one flow of conversation, which increases the requirements on the UE; if UE-A does not support early media service SDP, or does not support multiple different types of SDP messages, i.e., one flow of conversation can only have one media connection, then this method would not be implemented.

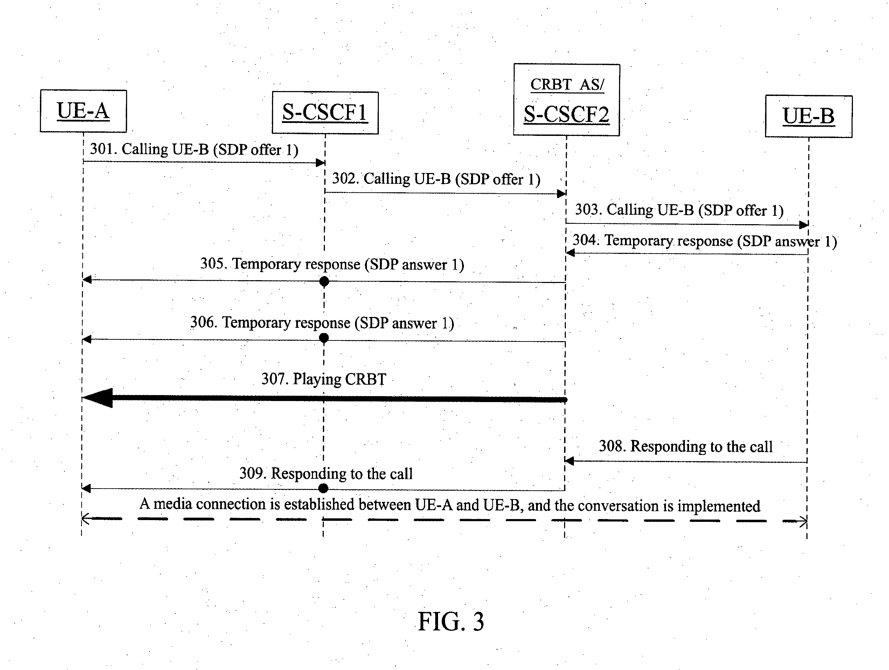

FIG. 3 illustrates the basic flow of messaging in another CRBT service according to the prior art, depicting a process of a calling party calling a called party and a CRBT server playing CRBT for the calling party during a call. The process is as follows:
Steps 301-304, the same with steps 201-204 in FIG. 2;
Step 305, a CRBT AS forwarding a temporary response message sent over by UE-B to the calling party, wherein the message reaches UE-A via S-CSCF2 and S-CSCF1;
Step 306, the CRBT AS executing a CRBT service specified by the called party, and playing CRBT information for the calling party, thus generating a new temporary response message, such as "183 Session Progress", the conversation identity of which being different from that of the message in step 305, adding a SDP answer of CRBT to the message body as a session type, and then forwarding it to UE-A, wherein the message reaches UE-A via S-CSCF2 and S-CSCF1;
Step 307, the CRBT AS playing CRBT media information to UE-A;
Step 308, UE-B responding to a call and sending a response message, for example sending a "200 OK" message, wherein the message reaches the CRBT AS via S-CSCF2;
Step 309, the CRBT AS stopping playing CRBT media information, and then forwarding the response message, wherein the message reaches UE-A via S-CSCF2 and S-CSCF1;
A media connection has been established between UE-A and UE-B by now, and the conversation commences.

The defect of this technique is that: the user equipment (UE) needs to identify two different temporary response messages belonging to the same call (steps 305-306), and must perform request/answer processing for the SDP message therein, which increases the requirements on the UE

### Summary of the Invention

The technical problem to be solved by the present invention is to provide a method and system for implementing Color Ring Back Tone (CRBT) and Color Ring Tone (CRT) services to avoid too high requirements on the user terminal so as to enable a conventional user terminal to enjoy the use of early media service without upgrade.

In order to solve the above problem, the present invention provides a method for implementing Color Ring Tone (CRT) service, comprising the following steps of:
a calling party sending a call originating request carrying a Session Description Protocol (SDP) request of a normal session to a called party through a CRT Sever and a conversion Application Server (AS), and the called party sending a temporary response to the calling party upon receiving the call originating request;
upon receiving the temporary response, the conversion AS adding an indication of supporting SDP for CRT service to the temporary response and sending the temporary response to the calling party through the CRT Server;
the calling party returning a Pre-Acknowledgement (PRACK) message, and upon receiving the PRACK message, the CRT Server adding a SDP offer for CRT to the PRACK message according to the indication of supporting SDP for CRT service and then sending PRACK message to the called party;
the conversion AS generating a new SDP offer based on the SDP offer for CRT upon receiving the PRACK message and sending the PRACK message including only the new SDP offer to the called party, and the called party completing CRT media negotiation according to SDP information in the PRACK message.

Furthermore, the conversion AS generating a new SDP offer based on the SDP offer for CRT means performing corresponding media modification on the SDP offer for CRT according to an order of media type required in the SDP offer for a normal session, and appending media information behind that the SDP offer for a normal session does not have but the SDP offer for CRT has.

Furthermore, the called party does not carry SDP information in the temporary response, and when the PRACK message carries a SDP offer for CRT, the conversion AS marks all media of a SDP answer for CRT in the response message as unavailable or inactive when returning a response message of the PRACK message.

Furthermore, when sending the PRACK message including only the new SDP offer to the called party, the conversion AS adds to the new SDP offer information of media type required by a session between the calling party and the called party.

Furthermore, if the conversion AS does not find a SDP offer for a normal session in a received response message from the called party, then the conversion AS sends a call originating request using an existing dialogue ID without any SDP to the called party;
the called party sends a response message carrying a SDP offer of the called party to the calling party; upon receiving the response message, the conversion AS forwards a response message carrying a SDP offer of the called party to the calling party.

In addition, the present invention further provides a system for implementing Color Ring Tone (CRT) service, comprising a CRT Sever located in a calling network and further comprising a conversion Application Server (AS) located in a called network, the conversion AS including an indication adding module and a Session Description Protocol (SDP) request generating module, wherein:
the indication adding module is used to add an indication of supporting SDP for CRT service to a temporary response after the conversion AS receives the temporary response of the called party for responding to a call originating request of the calling party, and then send the temporary response to the calling party;
the CRT Server is used to, upon receiving the PRACK message from the calling party for responding to the temporary response, add a SDP offer for CRT to the Pre-Acknowledgement (PRACK) message according to the indication of supporting CRT service carried in the call originating request, and send the PRACK message to the called party;
the SDP offer generating module is used to, upon receiving the PRACK message sent by the CRT Server, generate a new SDP offer based on the SDP offer for CRT, and send the PRACK message including only the new SDP offer to the called party.

Furthermore, the SDP offer generating module generates a new SDP offer based on the SDP offer for CRT in the following manner: performing corresponding media modification on the SDP offer for CRT according to an order of media type required in the SDP offer for a normal session, and appending media type information which the SDP offer for a normal session does not have while the SDP offer for CRT has.

Furthermore, the SDP offer generating module adds to the new SDP offer information of media type required by a session between the calling party and the called party.

Furthermore, if the conversion AS does not find a SDP offer for a normal session in a received response message from the called party, then the conversion AS sends a call originating request using an existing dialogue ID without any SDP to the called party.

### Brief Description of Drawings

FIG. 1 illustrates the network structure of the existing CRBT and CRT services;
FIG. 2 illustrates the basic flow of messaging in a CRBT service according to the prior art;
FIG. 3 illustrates the basic flow of messaging in another CRBT service according to the prior art;
FIG. 4 illustrates the network structure of the CRBT and CRT services according to the present invention;
FIG. 5 illustrates the basic flow of messaging in a CRBT service according to an example of the present invention;
FIG. 6 illustrates the basic flow of messaging in a CRT service according to an example of the present invention;
FIG. 7 illustrates the basic flow of messaging in a CRT service according to another example of the present invention;
FIG. 8 illustrates the basic flow of messaging where there are both CRBT and CRT according to an example of the present invention;
FIG. 9 illustrates the system for implementing CRBT service according to an example of the present invention;
FIG. 10 illustrates the system for implementing CRT service according to an example of the present invention.

### Preferred Embodiments of the Invention

The present invention will be described in further detail with reference to the drawings and preferred examples.

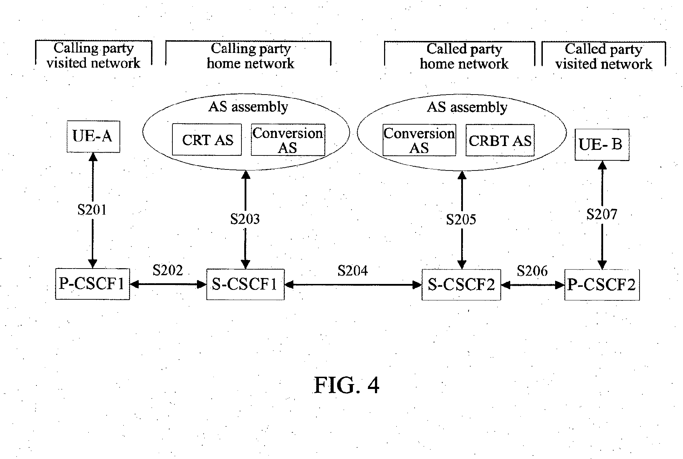

FIG. 4 illustrates the network structure of the CRBT and CRT services according to the present invention, which is the same with FIG. 2 except that a conversion AS is added to the service platforms of the calling party home network and the called party home network (AS assembly), whose function is to provide conversion services of early media for the calling UE and the called UE so as to enable a conventional user terminal equipment to enjoy the use of early media service without upgrade.

The method for implementing CRBT and CRT services according to the present invention will be further described below using two examples.

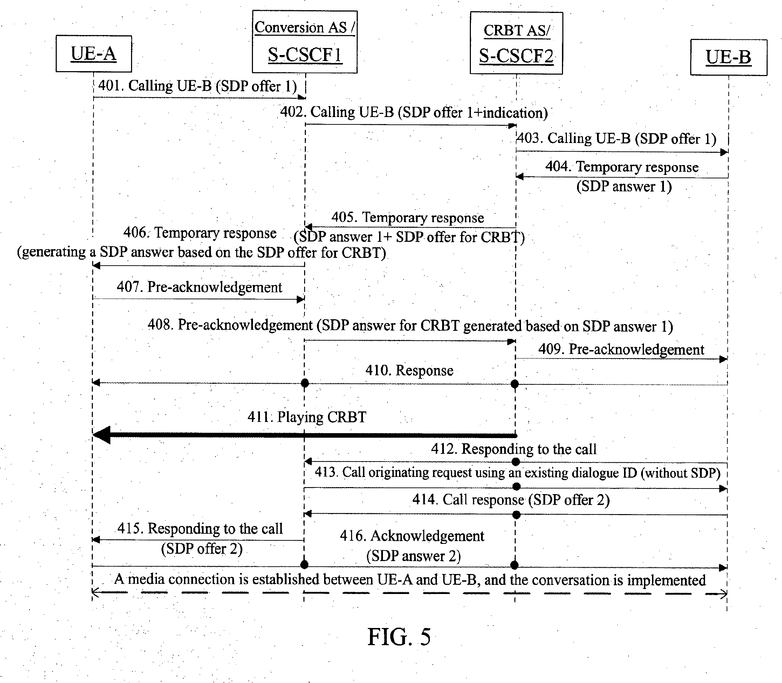

FIG. 5 illustrates the basic flow of messaging in a CRBT service according to an example of the present invention, depicting a process of a calling party calls a called party and a CRBT server plays CRBT for the calling party during a call. The process is as follows:
Step 401, UE-A sending a call originating request carrying a SDP offer 1 necessary for a call service to UE-B, for example, sending an INVITE message, wherein the SDP offer 1 is carried in the message body as a session type, and this message reaches the conversion AS via S-CSCF1;
   if UE-A supports early media service SDP, then an indication of supporting SDP for an early media service can be carried in the call originating request message; in this example, UE-A does not support early media service SDP.
Step 402, the conversion AS adding an indication of supporting SDP for CRBT service to the call message, for example adding an early-session indication in a header field of Supported, and then forwarding the call message, wherein the message reaches the CRBT AS via S-CSCF1 and S-CSCF2;
Step 403, the CRBT AS deleting the indication in step 402 before forwarding the message to UE-B, wherein the message reaches UE-B via S-CSCF2;
Step 404, upon receiving the call message, UE-B sending a temporary response message to the calling party, for example, sending a "183 Session Progress", and carrying in the message body a SDP answer 1 of UE-B necessary for a call service, wherein the temporary response message reaches the CRBT AS via S-CSCF2;
Step 405, the CRBT AS intending to execute a CRBT service specified by the called party and play CRBT information to the calling party, so it adding a SDP offer for CRBT to the temporary response message body as an early-session type according to the indication added in step 402, and forwarding it to UE-A, wherein the message reaches the conversion AS via S-CSCF2 and S-CSCF1;
Step 406, after receiving the temporary response message, the conversion AS finding that the message carries a SDP offer for CRBT service, then generating a SDP answer based on this SDP offer, and adding the above SDP answer to the message body as a session type after deleting CRBT SDP information and SDP information of a call service from the temporary response message, and then forwarding the modified temporary response message to the calling party, wherein the message reaches UE-A via S-CSCF1;
   Wherein, the conversion AS generating a SDP answer based on the SDP offer for CRBT means generating a SDP answer according to answer requirements of the SDP offer 1 and based on content of the SDP offer for CRBT.
   For example, if the media type of the SDP offer 1 is only audio, while the media types included in the SDP offer for CRBT are audio and video, then the generated SDP answer should only include the media type information of audio in the SDP offer for CRBT. This process is standard.
Step 407, upon receiving the temporary response message, UE-A completing media negotiation according to the SDP information in the temporary response message, then sending a pre-acknowledgement message, for example, sending a PRACK message, wherein the message reaches the conversion AS via S-CSCF1;
Step 408, upon receiving the PRACK message, the conversion AS generating a SDP answer for CRBT service based on the SDP information of UE-A in the SDP offer 1 received in step 401, and adding the generated SDP answer for CRBT to the message body as an early-session type, wherein the message reaches the CRBT AS via S-CSCF1 and S-CSCF2;
   At this moment, the conversion AS completes informing UE-A of the CRBT SDP information and informing the CRBT AS of the SDP information of UE-A so as to establish a media connection between UE-A and CRBT AS, thereby enabling the CRBT AS to play CRBT to UE-A. What is different from the prior art is that in this example UE-A only supports negotiation of one media connection during one session, so currently UE-A cannot negotiate with UE-B on resource information of media connection, and this negotiation can only be done after the call is responded when the CRBT media connection is not needed any more. Please see step 412 and the subsequent steps for details;
   Wherein, the conversion AS generating a SDP answer for CRBT based on the SDP offer 1 means generating a SDP answer for CRBT according to answer requirements of the SDP offer for CRBT and based on content of the SDP offer 1.
   For example, if the media types of the SDP offer for CRBT include audio and video, while the media type in the SDP offer 1 is only audio, then the generated SDP answer for CRBT should include the media type information of audio in the SDP offer 1, meanwhile media type information of video is fabricated, its port number is 0, indicating that the media type is unavailable. This process is standard.
Step 409, upon receiving the PRACK message, the CRBT AS completing negotiation of CRBT media according to the SDP answer for CRBT in the message, and deleting the SDP answer for CRBT from the PRACK message, then forwarding the PRACK message to the called UE-B, wherein the message reaches UE-B via S-CSCF2;
Step 410, upon receiving the PRACK message, UE-B sending a response message, for example, sending a "200 OK" message, wherein the message finally reaches UE-A via S-CSCF2, CRBT AS, S-CSCF2, S-CSCF1, conversion AS and S-CSCF1;
Step 411, the CRBT AS playing CRBT media information to UE-A;
Step 412, UE-B responding to the call, and sending a response message, for example, sending a "200 OK" message, wherein the message reaches the conversion AS via S-CSCF2, CRBT AS, S-CSCF2 and S-CSCF1;
Step 413, the conversion AS finding that the calling party cannot converse with the called party since the call service SDP answer 1 of the called party is not sent to UE-A in step 406, so the conversion AS sends a call originating request using an existing dialogue ID without any SDP information, for example a reINVITE message, to the called party, wherein the message finally reaches UE-B via S-CSCF1, S-CSCF2, CRBT AS and S-CSCF2;
Step 414, upon receiving the call originating request using an existing dialogue ID, UE-B sending a call response message, for example a "200 OK" message, carrying a new SDP offer 2 of UE-B in the message body as a session type, wherein the message reaches the conversion AS via S-CSCF2, CRBT AS, S-CSCF2 and S-CSCF1;
Step 415, the conversion AS forwarding the response message to UE-A, carrying the SDP offer 2 received in step 414 in the message body as a session type, wherein the message reaches UE-A via S-CSCF1;
Step 416, UE-A sending an acknowledgement message, for example sending an ACK message, carrying a SDP answer 2 responded by UE-B in the message body as a session type, wherein the message finally reaches UE-B via S-CSCF1, conversion AS, S-CSCF1, S-CSCF2, CRBT AS and S-CSCF2;
   A media connection has been established between UE-A and UE-B by now, and the conversation commences.

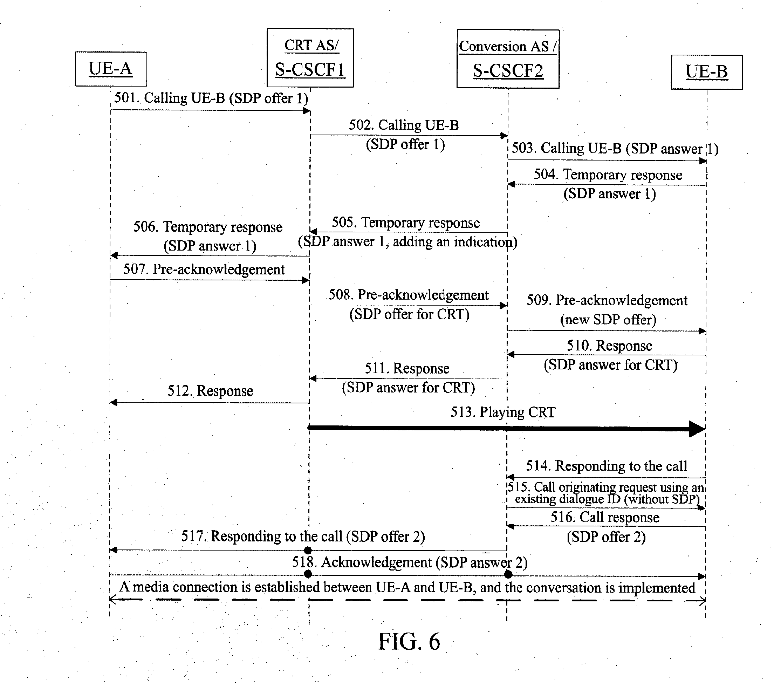

   FIG. 6 illustrates the basic flow of messaging in a CRT service according to an example of the present invention, depicting a process of a calling party calling a called party and a CRT server playing CRT to the called party during the call. The process is as follows:
Step 501, UE-A sending a call originating request carrying a SDP offer 1 necessary for a call service to UE-B, for example, sending an INVITE message, wherein the SDP offer 1 is carried in the message body as a session type, and this message reaches the CRT AS via S-CSCF1;
Step 502, the CRT AS forwarding the call message, wherein the message reaches the conversion AS via S-CSCF1 and S-CSCF2;
Step 503, the conversion AS forwarding the call message, wherein the message reaches UE-B via S-CSCF2;
Step 504, upon receiving the call message, UE-B sending a temporary response message to the calling party, for example, sending a "183 Session Progress", and carrying in the message body a SDP answer 1 of UE-B necessary for a call service, wherein the temporary response message reaches the conversion AS via S-CSCF2;
Step 505, the conversion AS judging whether the received message contain SDP information of a call service, i.e., whether the temporary response message carries a SDP answer 1, if yes, then adding an indication of supporting SDP for CRT service to the temporary response message, for example adding an early-session indication in the header field of Supported, then forwarding the temporary response message, wherein the message reaches the CRT AS via S-CSCF2 and S-CSCF1; if not, doing not add the indication but directly forwarding the temporary response message;
   In this example, UE-B carries the SDP answer 1 in the temporary response message, so the conversion AS adds an indication of supporting SDP for CRT service to the temporary response message; in other examples of the present invention, the indication of supporting SDP for CRT service-can be added directly without judgment.
Step 506, the CRT AS deleting the indication in step 505 before forwarding the temporary response message to UE-A, wherein the message reaches UE-A via S-CSCF1;
Step 507, upon receiving the temporary response message, UE-A completing media negotiation according to the SDP information in the temporary response message, then sending a pre-acknowledgement message, for example, sending a PRACK message, wherein the message reaches the CRT AS via S-CSCF1;
Step 508, the CRT AS intending to execute the CRT service specified by the called party and play CRT information to the calling party, so it adding a SDP offer for CRT to the pre-acknowledgement message body as an early-session type according to the indication added in step 505, and forwarding it to UE-B, wherein the message reaches the conversion AS via S-CSCF1 and S-CSCF2;
Step 509, after receiving the PRACK message, the conversion AS finding that the message carries a SDP offer for CRT, then generating a new SDP offer based on this SDP offer for CRT to modify the media resource information, and adding the above SDP offer to the message body as a session type after deleting CRT SDP information and SDP information of a call service that may be present from the PRACK message, and then forwarding the modified PRACK message to the called party, wherein the message reaches UE-B via S-CSCF2;
   Wherein, the conversion AS generating a new SDP offer based on the SDP offer for CRT means performing corresponding media modification on the SDP offer for CRT according to an order of media type required in the SDP offer 1, and appending media type information that the SDP offer 1 does not have while the SDP offer for CRT has.
   For example, the order of media type in the SDP offer 1 is audio, video, while the order of media type in the SDP offer for CRT is video, audio, then the order of media type of the SDP offer for CRT should modified to audio, video;
   Or, the media type in the SDP offer 1 is only audio, while the media types in the SDP offer for CRT include video and audio (the order is video, audio), then a media type of video should be added to the new SDP offer, and the order of media types in the new SDP offer should be audio, video, the media type information comes from the SDP offer for CRT. This process is standard.
   Moreover, the conversion AS may also add information of media type necessary for a call between the calling party and the called party to the new SDP offer, enabling UE-B to retain related information of all media necessary for a call service, so that UE-B can carry related information of all media necessary for all call services in the SDP offer sent by UE-B in the subsequent re-negotiation process (step 515 and the subsequent steps), by which the media connection between UE-A and UE-B established after re-negotiation includes all media types necessary for a call service.
Step 510, upon receiving the PRACK message, UE-B sending a response message, for example, sending a "200 OK" message, carrying a SDP answer of CRT service responded by UE-B in the message body as a session type, wherein the message reaches the conversion AS via S-CSCF2; at this moment, the media resource information of UE-B has been modified, but UE-A does not know this modification, therefore, the media connection cannot be established between UE-A and UE-B;
Step 511, upon receiving the response message, the conversion AS generating an answer to the SDP offer for CRT based on the SDP information of UE-B received in step 510, and adding the generated SDP answer for CRT to the message body as an early-session type, wherein the message reaches the CRT AS via S-CSCF2 and S-CSCF 1;
   At this moment, the conversion AS completes informing UE-B of the SDP information for CRT and informing the CRT AS of the SDP information of UE-B so as to establish a media connection between UE-B and CRT AS, thereby enabling the CRT AS to play CRT to UE-B. What is different from the prior art is that in this example UE-B only supports negotiation of one media connection during one session, so currently UE-B cannot continue to negotiate with UE-A on resource information of media connection, and this negotiation can only be done after the call is responded when the CRT media connection is not needed any more. Please see step 514 and the subsequent steps for details;
Step 512, upon receiving the response message, the CRT AS completing negotiation of CRT media according to the SDP answer for CRT in the response message, deleting the SDP answer for CRT from the response message, and then forwarding the response message to the calling UE-A, wherein the message reaches UE-A via S-CSCF1;
Step 513, the CRT AS playing the CRT media information to UE-B;
Step 514, UE-B responding to the call and sending a response message, for example, sending a "200 OK" message, wherein the message reaches the conversion AS via S-CSCF2;
Step 515, the conversion AS finding that the called party cannot converse with the calling party since the media connection of UE-B has been updated to receive CRT media in step 509, so the conversion AS sending a call originating request using an existing dialogue ID-without any SDP information, for example a reINVITE message, to the called party, wherein the message reaches UE-B via S-CSCF2;
Step 516, upon receiving the call originating request using an existing dialogue ID, UE-B sending a call response message, for example a "200 OK" message, carrying a new SDP offer 2 of UE-B in the message body as a session type, wherein the message reaches the conversion AS via S-CSCF2;
Step 517, the conversion AS forwarding the response message to UE-A, carrying the SDP offer 2 received in step 516 in the message body as a session type, wherein the message finally reaches UE-A via S-CSCF2, S-CSCF1, CRT AS and S-CSCF1;
Step 518, UE-A sending an acknowledgement message, for example sending an ACK message, to the called party, carrying a SDP answer 2 responded by UE-A in the message body as a session type, wherein the message finally reaches UE-B via S-CSCF1, CRT AS, S-CSCF1, S-CSCF2, conversion AS and S-CSCF2;
   A media connection has been established between UE-A and UE-B by now, and the conversation commences.

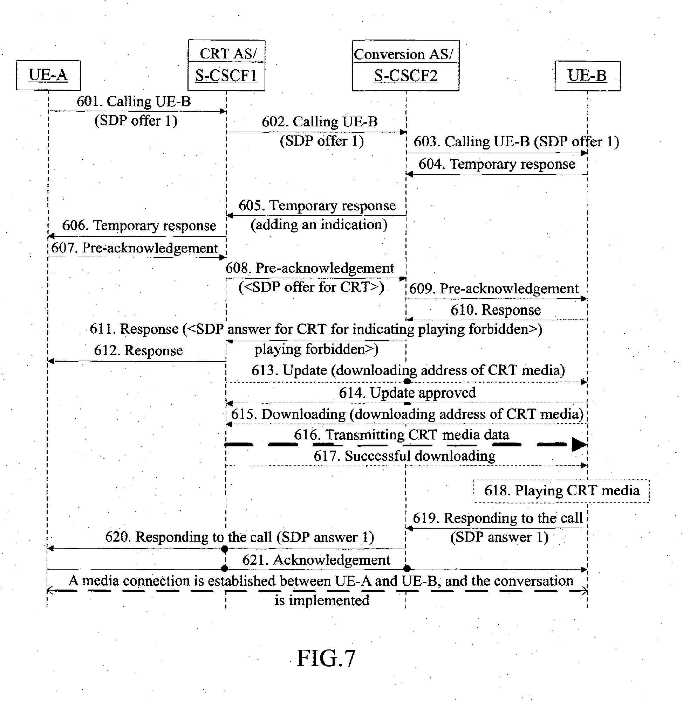

   FIG. 7 illustrates the basic flow of messaging in a CRT service in downloading mode according to the present invention, depicting a process in which a calling party calls a called party, and a CRT server has to provide CRT media for the called party in other modes due to flow restriction of the called party. The process is as follows:
Steps 601-603, the same with steps 501-503 in FIG. 5;
Step 604, upon receiving the call message, UE-B sending a temporary response message, for example, sending a "180 Ringing" message, to the calling party, wherein the message reaches the conversion AS via S-CSCF2; this temporary response message does not carry a SDP answer;
Step 605, if the conversion AS judges that the received message does not contain SDP information of a call service, then not adding an indication of supporting SDP for CRT service; forwarding the temporary response message, wherein the message reaches the CRT AS via S-CSCF2 and S-CSCF1;
   Or, an indication of supporting SDP for CRT service may also be added directly without judgment, for example, adding an early-session indication in a header field of Supported, and then forwarding the temporary response message;
Step 606, if an indication of supporting SDP for CRT service is added in step 605, then the CRT AS deleting the indication before forwarding the temporary response message to UE-A, wherein the message reaches UE-A via S-CSCF1;
Step 607, upon receiving the temporary response message, UE-A sending a pre-acknowledgement message, for example, sending a PRACK message, wherein the message reaches the CRT AS via S-CSCF1;
Step 608, if an indication of supporting SDP for CRT service is added in step 605, then the CRT AS adding a SDP offer for CRT in the PRACK message body as an early-session type, then forwarding the message to UE-B; if no indication is added, the CRT AS directly forwarding the PRACK message, wherein the message reaches the conversion AS via S-CSCF1 and S-CSCF2;
Step 609, the conversion AS receiving the PRACK message, and if the PRACK message carries a SDP offer for CRT service but the conversion AS has not received the SDP information of the called user, the conversion AS cannot send the SDP offer for CRT to UE-B before receiving a SDP answer since standards require that a response must follows a SDP offer for negotiating a certain media connection, so the conversion AS deleting the CRT SDP information from the PRACK message, and then forwarding the modified PRACK message to the called party, otherwise, directly forwarding the PRACK message to the called party, wherein the message reaches UE-B via S-CSCF2;
Step 610, upon receiving the PRACK message, UE-B sending a response message, for example sending a "200 OK" message, wherein the message reaches the conversion AS via S-CSCF2;
Step 611, the conversion AS receiving the response message, and if the message received in step 609 carries a SDP offer for CRT, the conversion AS generating a CRT SDP answer since an answer must be made to a request; the conversion AS must notify the CRT AS not to play CRT to UE-B since actually the conversion AS cannot make UE-B and the CRT AS exchange SDP information, therefore, the port numbers of all media in the SDP answer for CRT are 0, indicating unavailable, or all properties of all media are inactive, all of which indicate playing forbidden, and also add the generated SDP answer for CRT in the message body as an early-session type; if the message received in step 609 does not carry SDP information for CRT, then directly forwarding the response message, wherein the message reaches the CRT AS via S-CSCF2 and S-CSCF1;
Step 612, upon receiving the response message, if a SDP offer for CRT is added in step 608 and thus the received response message will carry a SDP answer for CRT, then the CRT AS completing CRT media negotiation according to the SDP answer for CRT in the received response message, in which case the result is not playing CRT, afterwards deleting the SDP answer for CRT from the response message, and forwarding the modified response message to the calling UE-A; if no SDP offer for CRT is added to the PRACK message in step 608 and thus the received response message does not carry a SDP answer for CRT, then directly forwarding the response message, wherein the message reaches UE-A via S-CSCF1;
   If the CRT AS wishes to provide CRT service in downloading mode, then the followings steps 613-618 are executed:
Step 613, the CRT AS sending an update message, for example sending an UPDATE message, to the called party, the message carrying a downloading address of CRT media data, for example, in Alert-Info or Call-Info, wherein the message finally reaches UE-B via S-CSCF1, S-CSCF2, conversion AS and S-CSCF2;
Step 614, UE-B sending a message for approving update, for example, sending a "200 OK" message, wherein the message reaches the CRT AS via S-CSCF2, conversion AS, S-CSCF2 and S-CSCF1;
Step 615, UE-B initiating a downloading request, for example sending a GET request of HTTP (Hyper Text Transport Protocol), to the CRT AS according to the downloading address of the CRT media data to request for the CRT media data, wherein the request message carries the downloading address of the CRT media data;
Step 616, the CRT AS sending the CRT media data to UE-B according to the address of the CRT media data;
Step 617, after transmission of the CRT media data is completed, the CRT AS sending a message for indicating successful downloading to UE-B, for example, sending a message of "200 OK" of HTTP;
Step 618, UE-B playing the downloaded CRT media to the user;
Step 619, UE-B responding to the call and sending a response message, for example, sending a "200 OK" message, wherein the message reaches the conversion AS via S-CSCF2;
Step 620, the conversion AS forwarding the response message to the called party once it finds that the called party is already able to have a conversation with the calling party, wherein the message finally reaches UE-A via S-CSCF2, S-CSCF1, CRT AS and S-CSCF1;
Step 621, UE-A sending an acknowledgement message, for example sending an ACK message, to the called party, wherein the message finally reaches UE-B via S-CSCF1, CRT AS, S-CSCF1, S-CSCF2, conversion AS and S-CSCF2;
   A media connection has been established between UE-A and UE-B by now, and the conversation commences.

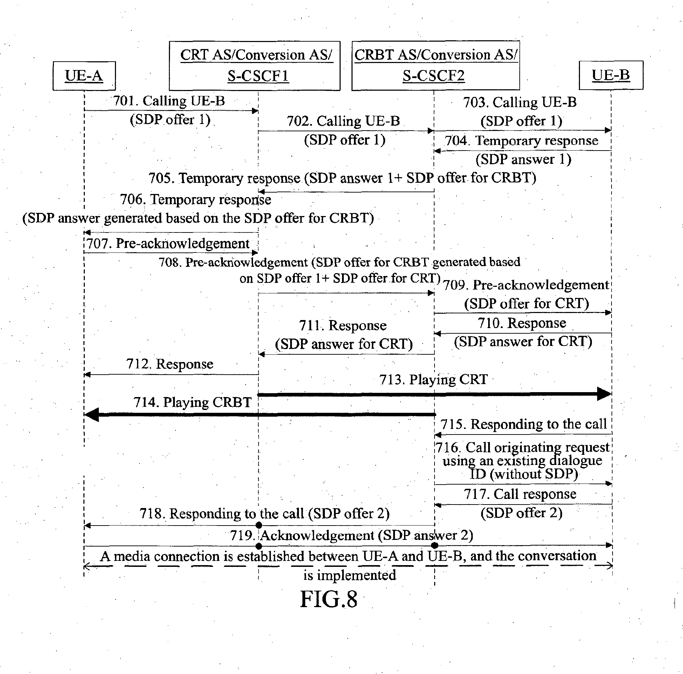

   FIG. 8 illustrates the basic flow of messaging in a case that there are both CRBT and CRT according to an example of the present invention, depicting a process of a calling party calling a called party, a CRBT server playing CRBT media to the calling party during a call and a CRT serve playing CRT media to the called party during a call. The function of the conversion AS and that of the CRBT/CRT AS are regarded collectively in the following flows in order to make the description brief. The process is as follows:
Step 701, UE-A initiating a call originating request carrying a SDP offer 1 necessary for a call service, for example, sending an INVITE message, to UE-B, wherein the SDP offer 1 is carried in the message body as a session type, and the message reaches CRT/conversion AS via S-CSCF1;
Step 702, CRT/conversion AS receiving the call message, at which moment, the CRT AS function has no action to execute, the conversion AS executes its function and adds an indication of supporting SDP for CRT service to the call message, for example, adding an early-session indication in a header field of Supported, then forwarding the call message modified by only the conversion AS function to the called party, wherein the message reaches the CRBT/conversion AS via S-CSCF2 and S-CSCF1;
Step 703, the CRBT/conversion AS receiving the call message, in which case neither of the two AS functions have action to execute, so forwarding the call message that is not modified to the called party, wherein the message reaches UE-B via S-CSCF2;
Step 704, UE-B sending a temporary response message, for example, sending a "183 Session Progress" message, to the calling party upon receiving the call message, carrying a SDP answer 1 of UE-B necessary for a call service in the message body as a session type, wherein the temporary response message reaches the CRBT/conversion AS via S-CSCF2;
Step 705, the CRBT/conversion AS receiving the temporary response message, and the conversion AS executing its function by adding an indication of supporting SDP for CRT service-to the temporary response message, for example adding an early-session indication in a header field of Supported, meanwhile the CRBT AS executing its function by adding a SDP offer for CRBT in the temporary response message body as an early-session type according to the indication added in step 702, then forwarding the temporary response message modified by the two AS functions to UE-A, wherein the message reaches CRT/conversion AS via S-CSCF2 and S-CSCF1;
Step 706, CRT/conversion AS receiving the temporary response message, wherein the CRT function can delete the indication in step 705 from the temporary response message, and the conversion AS function finds that the temporary response message carries a SDP offer for CRBT service, then generating a SDP answer based on this SDP offer, and deleting all SDP information from the temporary response message before adding the generated SDP answer, afterwards, forwarding the temporary response message modified by the two AS functions to UE-A, wherein the message reaches UE-A via S-CSCF1;
Step 707, upon receiving the temporary response message, UE-A completing media negotiation according to the SDP information in the temporary response message, then sending a pre-acknowledgement message, for example, sending a PRACK message, wherein the message reaches the CRBT/conversion AS via S-CSCF1;
Step 708, the CRT/conversion AS receiving the PRACK message, the CRT AS intending to execute the CRT service specified by the called party and play CRT information to the called party, so it adding a SDP offer for CRT to the PRACK message body as an early-session type according to the indication added in step 705, meanwhile the conversion AS function generating an answer to the SDP offer for CRBT corresponding to the SDP offer 1 of a call service of the calling party received in step 701, and also adding the generated SDP answer for CRBT in the message body as an early-session type, afterwards forwarding the PRACK message modified by the two AS functions to the called party, wherein the message reaches the CRBT/conversion AS via S-CSCF1 and S-CSCF2;
Step 709, the CRBT/conversion AS receiving the PRACK message, the CRBT AS function completing negotiation of CRBT media according to the SDP answer for CRBT in the PRACK message and deleting the SDP answer for CRBT from the PRACK message, meanwhile the conversion AS function finding that the PRACK message carries a SDP offer for CRT service, so it generating a new SDP offer based on this SDP offer and adding the generated SDP offer to the message body as a session type after deleting CRT SDP information and SDP information of a call service that may be present from the PRACK message, and then forwarding the PRACK message modified by the two AS functions to the called party, wherein the message reaches UE-B via S-CSCF2;
   Moreover, the conversion AS may also add information of media type necessary for a call between the calling party and the called party to the new SDP offer, enabling UE-B to retain related information of all media necessary for a call service, so that UE-B can carry related information of all media necessary for all call services in the SDP offer sent by UE-B in the subsequent re-negotiation process (step 716 and the subsequent steps), by which the media connection between UE-A and UE-B established after re-negotiation includes all media types necessary for a call service.
Step 710, upon receiving the PRACK message, UE-B sending a response message, for example, sending a "200 OK" message, carrying a SDP answer of CRT service responded by UE-B in the message body as a session type, wherein the message reaches the CRBT/conversion AS via S-CSCF2;
Step 711, the CRBT/conversion AS receiving the response message, the CRBT AS function having no action to execute while the conversion AS function generating an answer of the SDP offer for CRT based on the SDP information of UE-B received in step 710, adding the generated SDP answer for CRT to the message body as an early-session type, and then forwarding the response message modified only by the conversion AS function to the calling party, wherein the message reaches the CRT/conversion AS via S-CSCF2 and S-CSCF1;
Step 712, the CRT/conversion AS receiving the response message, the conversion AS function having no action to execute while the CRT AS function completing negotiation of CRT media according to the SDP answer for CRT in the response message, deleting the SDP answer for CRT from the response message, and then forwarding the response message modified only by the CRT AS to the calling party, wherein the message finally reaches UE-A via S-CSCF1;
Step 713, the CRT AS playing CRT media information to UE-B;
Step 714, the CRBT AS playing CRBT media information to UE-A;
Step 715, UE-B responding to a call and sending a response message, for example sending a "200 OK" message, wherein the message reaches the CRBT/conversion AS via S-CSCF2;
Step 716, the CRBT/conversion AS receiving the response message, the CRBT AS function having no action to execute while the conversion AS function finding that the called party cannot converse with the calling party yet since the media connection of UE-B has been updated to receive CRT media in step 709, so the conversion AS sending a call originating request using an existing dialogue ID without any SDP information, for example a reINVITE message, to the called party; if the CRBT AS and the conversion AS are not the same functional entity, then the call originating request using an existing dialogue ID may pass through the CRBT AS, but the CRBT AS does not have any action to execute on the re-call message, and then the message reaches UE-B via S-CSCF2;
Step 717, upon receiving the call originating request using an existing dialogue ID, UE-B sending a call response message, for example a "200 OK" message, carrying a new SDP offer 2 of UE-B in the message body as a session type, wherein the message reaches the CRBT/conversion AS via S-CSCF2;
Step 718, the CRBT/conversion AS receiving the call response message, the CRBT AS having no action to execute while the conversion AS forwarding the response message to UE-A, carrying the SDP offer 2 received in step 717 in the message body as a session type; if the CRBT AS and the conversion AS are not the same functional entity, then the reponse message may pass through the CRBT AS, but CRBT AS does not have any action to execute on the response message, and then the message reaches CRT/conversion AS via S-CSCF2 and S-CSCF1; the CRT AS function has no action to execute, and the conversion AS has no action to execute either since the response message carries a SDP offer for a call service, so the message is forwarded to the calling party without any modification, and then the message reaches UE-A via S-CSCF1;
Step 719, UE-A sending an acknowledgement message, for example sending an ACK message, to the called party, carrying a SDP answer 2 responded by UE-A in the message body as a session type, wherein the message finally reaches UE-B via S-CSCF 1, CRT/conversion AS, S-CSCF1, S-CSCF2, CRBT/conversion AS and S-CSCF2;

A media connection has been established between UE-A and UE-B by now, and the conversation commences.

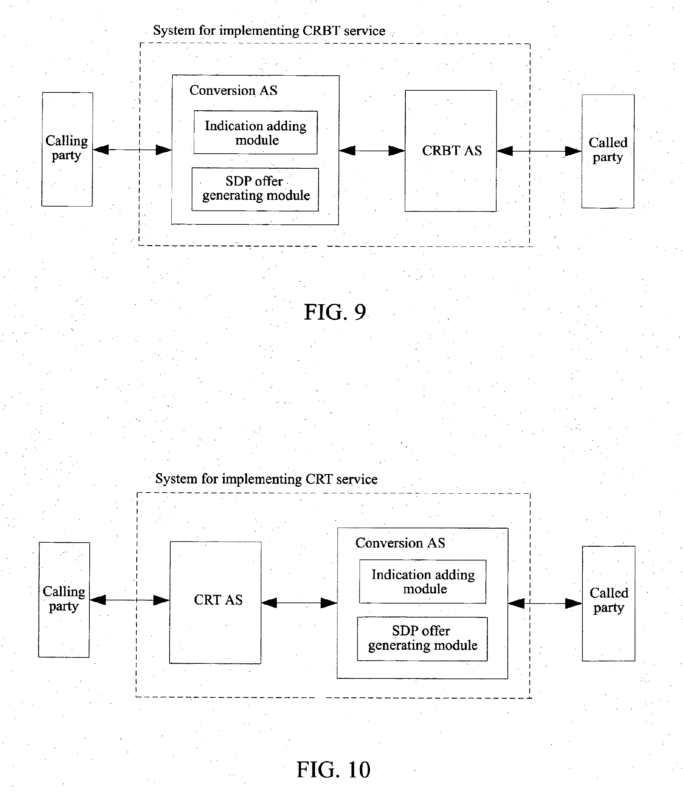

FIG. 9 illustrates the system for implementing CRBT service according to an example of the present invention, wherein this system comprises a CRBT Sever located in a called network and a conversion Application Server (AS) located in a calling network, the conversion AS including an indication adding module and a Session Description Protocol (SDP) answer generating module, wherein:
the indication adding module is used to add an indication of supporting SDP for CRBT service to a call originating request if the call originating request does not carry an indication of supporting SDP for CRBT service after the conversion AS receives the call originating request carrying a SDP offer for a normal session sent by the calling party, and then send the call originating request to the called party;
the SDP answer generating module is used to generate a SDP answer based on a SDP offer for CRBT after the conversion AS receives a temporary response sent by the CRBT Server and to send the temporary response containing only the SDP answer to the calling party; and to generate a SDP answer for CRBT based on the SDP offer of a normal session upon receiving a Preliminary Acknowledgement (PRACK) message of the calling party for responding to the temporary response and to send the SDP answer for CRBT to the CRBT Server by including the SDP answer for CRBT in the PRACK message;
the CRBT Server is used to, upon receiving the temporary response returned by the called party, add a SDP offer for CRBT to the temporary response according to an indication of supporting SDP for CRBT service carried in the call originating request, and send the temporary response to the calling party; and also to complete CRBT media negotiation according to the SDP answer for CRBT upon receiving the PRACK message sent by the conversion AS.

FIG. 10 illustrates the system for implementing CRT service according to an example of the present invention, comprising a CRT Sever located in a calling network and a conversion Application Server (AS) located in a called network, the conversion AS including an indication adding module and a Session Description Protocol (SDP) offer generating module, wherein:
the indication adding module is used to add an indication of supporting SDP for CRT service to a temporary response after the conversion AS receives the temporary response of the called party for responding to a call originating request of the calling party, and then send the temporary response to the calling party;
the CRT Server is used to add a SDP offer for CRT to a PRACK message according to the indication of supporting SDP for CRT service carried in the call originating request upon receiving the PRACK message of the calling party for responding to the temporary response and then send the PRACK message to the called party;
the SDP offer generating module is used to generate a new SDP offer based on the SDP offer for CRT upon receiving the PRACK message sent by the CRT Server and send the PRACK message including only the new SDP offer to the called party.

Wherein, the SDP offer generating module adds to the new SDP offer information of media type required by a session between the calling party and the called party.

Of course, the present invention may have many other examples, and a person having ordinary skill in the art can make various corresponding modifications and transformations according to the present invention However, the above examples in this application are not to limit the scope of the invention, and the protection scope of the present invention is defined by the attached claims.

### Industrial Applicability

The present invention can be applied to implementation of early media services including CRBT and CRT services, and it avoids too high requirements on the user terminal by incorporating a conversion AS, thereby enabling a conventional user terminal to enjoy the use of early media services without upgrade.

## Claims

1. A method for implementing Color Ring Tone CRT service, comprising the following steps of:
a calling party sending a call originating request carrying a Session Description Protocol SDP offer for a normal session to a called party through a CRT Server and a conversion Application Server AS (501-503,601-603), and the called party sending a temporary response to the calling party upon receiving the call originating request (504,604);
**characterized by**, upon receiving the temporary response, the conversion AS adding an indication of supporting CRT service into the temporary response (505,605) and sending the temporary response to the calling party through the CRT Server (506,606);
the calling party returning a Pre-Acknowledgement PRACK message (507,607), and upon receiving the PRACK message, the CRT Server adding a SDP offer for CRT into the PRACK message according to the indication of supporting CRT service and then sending PRACK message to the called party (508,608);
the conversion AS generating a new SDP offer based on the SDP offer for CRT upon receiving the PRACK message and sending the PRACK message including only the new SDP offer to the called party (509), and the called party completing CRT media negotiation according to SDP information in the PRACK message.

2. The method of claim 1, wherein, the conversion AS generating a new SDP offer based on the SDP offer for CRT means performing corresponding media modification on the SDP offer for CRT according to an order of media type required in the SDP offer for a normal session, and appending media information behind that the SDP offer for a normal session does not have but the SDP offer for CRT has.

3. The method of claim 1, wherein, the called party does not carry SDP information in the temporary response, and when the PRACK message carries a SDP offer for CRT, the conversion AS marks all media of a SDP answer for CRT in the response message as unavailable or inactive when returning a response message of the PRACK message (611).

4. The method of claim 1, wherein, when sending the PRACK message including only the new SDP offer to the called party, the conversion AS adds to the new SDP offer information of media type required by a session between the calling party and the called party.

5. The method of claim 1, wherein,
if the conversion AS does not find a SDP offer for a normal session in a received response message from the called party, then the conversion AS sends a call originating request using an existing dialogue ID without any SDP to the called party (514, 515);
the called party sends a response message carrying a SDP offer of the called party to the calling party (516); upon receiving the response message, the conversion AS forwards a response message carrying a SDP offer of the called party to the calling party (517).

6. A system for implementing Color Ring Tone CRT service, comprising a CRT Server located in a calling network, **characterized in that** the system further comprises a conversion Application Server AS located in a called network, the conversion AS including an indication adding module and a Session Description Protocol SDP offer generating module, wherein:
the indication adding module is adapted to add an indication of supporting SDP for CRT service to a temporary response after the conversion AS receives the temporary response from the called party for responding to a call originating request sent by the calling party, and then send the temporary response to the calling party;
the CRT Server is adapted to, upon receiving the PRACK message from the calling party for responding to the temporary response, add a SDP offer for CRT to the Pre-Acknowledgement PRACK message according to the indication of supporting CRT service carried in the call originating request, and send the PRACK message to the called party;
the SDP offer generating module is adapted to, upon receiving the PRACK message sent by the CRT Server, generate a new SDP offer based on the SDP offer for CRT, and send the PRACK message including only the new SDP offer to the called party.

7. The system of claim 6, wherein, the SDP offer generating module is adapted to generate a new SDP offer based on the SDP offer for CRT in the following manner: performing corresponding media modification on the SDP offer for CRT according to an order of media type required in the SDP offer for a normal session, and appending media information behind that the SDP offer for a normal session does not have while the SDP offer for CRT has.

8. The system of claim 6, wherein, the SDP offer generating module is adapted to add to the new SDP offer information of media type required by a session between the calling party and the called party.

9. The system of claim 6, wherein, if the conversion AS does not find a SDP offer for a normal session in a received response message from the called party, then the conversion AS is adapted to send a call originating request using an existing dialogue ID without any SDP to the called party.

## Patentansprüche

1. Verfahren zur Implementierung eines Farb-Rufton-(CRT-)Dienstes, folgende Schritte umfassend:
ein Anrufer sendet eine Gesprächsursprung-Anforderung, die ein Session-Description-Protocol-(SDP-)Angebot für eine normale Sitzung trägt, über einen CRT-Server und einen Konvertierungsanwendungsserver (AS) (501-503, 601-603) an einen Angerufenen und der Angerufene sendet bei Erhalt der Gesprächsursprung-Anforderung (504, 604) eine vorläufige Antwort an den Anrufer;
dadurch gekenntzeichnet, dass der Konvertierungs-AS bei Empfang der vorläufigen Antwort ein Zeichen zur Unterstützung des CRT-Dienstes dieser vorläufigen Antwort (505, 605) hinzufügt und die vorläufige Antwort über den CRT-Server (506, 606) an den Anrufer sendet;
der Anrufer eine Vorempfangs-(Pre-Acknowledgement, PRACK)-Nachricht (507, 607) zurücksendet und bei Empfang der PRACK-Nachricht der CRT-Server entsprechend dem Zeichen zur Unterstützung des CRT-Dienstes ein SDP-Angebot für CRT der PRACK-Nachricht hinzufügt und dann die PRACK-Nachricht an den Angerufenen (508, 608) zurücksendet;
der Konvertierungs-AS beim Empfang der PRACK-Nachricht ein neues SDP-Angebot auf der Grundlage des SDP-Angebots für CRT erzeugt und die PRACK-Nachricht, die nur das neue SDP-Angebot enthält, an den Angerufenen (509) zurücksendet und der Angerufene die CRT-Medienvermittlung gemäß der SDP-Information in der PRACK-Nachricht vervollständigt.

2. Verfahren nach Anspruch 1, wobei der Konvertierungs-AS ein neues SDP-Angebot auf der Grundlage des SDP-Angebots für CRT-Mittel erzeugt, die eine entsprechende Medienmodifikation am SDP-Angebot für CRT entsprechend einem Medientypauftrag, der im SDP-Angebot für eine normale Sitzung verlangt wird, vornimmt und Medieninformationen hinten anhängt, die das SDP-Angebot für eine normale Sitzung nicht hat, aber das SDP-Angebot für CRT hat.

3. Verfahren nach Anspruch 1, wobei der Angerufene keine SDP-Information in der vorläufigen Antwort trägt, und wenn die PRACK-Nachricht ein SDP-Angebot für CRT trägt, markiert der Konvertierungs-AS alle Medien einer SDP-Antwort für CRT in der Antwortnachricht als nicht verfügbar oder inaktiv, wenn eine Antwortnachricht der PRACK-Nachricht (611) zurückgesendet wird.

4. Verfahren nach Anspruch 1, wobei der Konvertierungs-AS beim Senden der PRACK-Nachricht, die nur das neue SDP-Angebot an den Angerufenen enthält, dem neuen SDP-Angebot Informationen über den Medientyp hinzufügt, der für eine Sitzung zwischen dem Anrufer und dem Angerufenen verlangt wird.

5. Verfahren nach Anspruch 1, wobei
der Konvertierungs-AS, falls der Konvertierungs-AS kein SDP-Angebot für eine normale Sitzung in einer empfangenen Antwortnachricht vom Angerufenen findet, eine Gesprächsursprung-Anforderung, die eine bestehende Dialog-ID verwendet, ohne SDP an den Angerufenen (514, 515) sendet;
der Angerufene eine Antwortnachricht sendet, die ein SDP-Angebot des Angerufenen an den Anrufer (516) trägt; bei Erhalt der Antwortnachricht sendet der Konvertierungs-AS eine Antwortnachricht, die ein SDP-Angebot des Angerufenen an den Anrufer (517) trägt.

6. System zur Implementierung des Farbrufton-(CRT-)Dienstes, das einen CRT-Server umfasst, der in einem Netz des Anrufers angesiedelt ist, **dadurch gekennzeichnet, dass** das System weiter einen Konvertierungs-Anwendungsserver (AS) umfasst, der in einem Netz des Angerufenen angesiedelt ist, wobei der Konvertierungs-AS ein Zeichen-hinzufügendes Modul und ein Erzeugungsmodul für ein Session-Description-Protocol-(SDP-)Angebot beinhaltet, wobei:
das Zeichen-hinzufügende Modul angepasst ist, um ein Zeichen zur Unterstützung der SDP für den CRT-Dienst zu einer vorläufigen Antwort hinzuzufügen, nachdem der Konvertierungs-AS die vorläufige Antwort vom Angerufenen erhält, um auf eine Gesprächsursprung-Anforderung zu reagieren, die vom Anrufer gesendet wird, und dann die vorläufige Antwort an den Anrufer zu senden;
der CRT-Server angepasst ist, um nach Erhalt der PRACK-Nachricht vom Anrufer als Reaktion auf die vorläufige Antwort ein SDP-Angebot für CRT auf die Vorempfangsnachricht (PRACK) gemäß dem Zeichen zur Unterstützung des CRT-Dienstes hinzuzufügen, der von allen Gesprächsursprung-Anforderungen getragen wird, und die PRACK-Nachricht an den Angerufenen zu senden;
das Erzeugungsmodul für das SDP-Angebot angepasst ist, um nach Erhalt der vom CRT-Server gesendeten PRACK-Nachricht ein neues SDP-Angebot auf der Grundlage des SDP-Angebots für CRT zu erzeugen, und die PRACK-Nachricht, die nur das neue SDP-Angebot an den Angerufenen enthält, zu senden.

7. System nach Anspruch 6, wobei das Erzeugungsmodul für das SDP-Angebot an ein neues SDP-Angebot auf der Grundlage des SDP-Angebots für CRT angepasst ist, und zwar wie folgt: Durchführen entsprechender Medienmodifikation am SDP-Angebot für CRT entsprechend einem Medientypauftrag, der im SDP-Angebot für eine normale Sitzung verlangt wird, und Anhängen von Medieninformationen, die das SDP-Angebot für eine normale Sitzung nicht hat, während das SDP-Angebot für CRT sie hat.

8. System nach Anspruch 6, wobei das Erzeugungsmodul für das SDP-Angebot angepasst ist, um die neuen SDP-Angebotsinformationen des Medientyps hinzuzufügen, der von einer Sitzung zwischen dem Anrufer und dem Angerufenen verlangt ist.

9. System nach Anspruch 6, wobei der Konvertierungs-AS, falls der Konvertierungs-AS kein SDP-Angebot für eine normale Sitzung in einer empfangenen Antwortnachricht vom Angerufenen findet, dazu angepasst ist, eine Gesprächsursprung-Anforderung, die eine bestehende Dialog-ID verwendet, ohne SDP an den Angerufenen zu senden.

## Revendications

1. Procédé de mise en oeuvre d'un service de tonalité d'appel en couleur, CRT, comprenant les étapes ci-dessous dans lesquelles :
une partie appelante envoie une demande de provenance d'appel contenant une offre de protocole de description de session, SDP, pour une session normale, à une partie appelée, à travers un serveur de tonalité CRT et un serveur d'application, AS, de conversion (501 - 503, 601 - 603), et la partie appelée envoie une réponse temporaire à la partie appelante suite à la réception de la demande de provenance d'appel (504, 604) ;
**caractérisé en ce que**, suite à la réception de la réponse temporaire, le serveur AS de conversion ajoute une indication de prise en charge de service de tonalité CRT dans la réponse temporaire (505, 605), et envoie la réponse temporaire à la partie appelante à travers le serveur de tonalité CRT (506, 606) ;
la partie appelante renvoie un message de pré-accusé de réception, PRACK, (507, 607), et suite à la réception du message de pré-accusé PRACK, le serveur de tonalité CRT ajoute une offre de protocole SDP pour service de tonalité CRT dans le message de pré-accusé PRACK selon l'indication de prise en charge de service de tonalité CRT, et envoie ensuite un message de pré-accusé PRACK à la partie appelée (508, 608) ;
le serveur AS de conversion génère une nouvelle offre de protocole SDP sur la base de l'offre de protocole SDP pour service de tonalité CRT suite à la réception du message de pré-accusé PRACK et envoie le message de pré-accusé PRACK incluant uniquement la nouvelle offre de protocole SDP à la partie appelée (509), et la partie appelée achève une négociation de support multimédia de tonalité CRT selon les informations de protocole SDP dans le message de pré-accusé PRACK.

2. Procédé selon la revendication 1, dans lequel, la génération, par le serveur AS de conversion, d'une nouvelle offre de protocole SDP sur la base de l'offre de protocole SDP pour service de tonalité CRT consiste à mettre en oeuvre une modification de support multimédia correspondant sur l'offre de protocole SDP pour service de tonalité CRT selon un ordre de type de supports multimédias requis dans l'offre de protocole SDP pour une session normale, et à annexer des informations de support multimédia à la suite de celles dont l'offre de protocole SDP pour une session normale ne dispose pas, mais dont dispose l'offre de protocole SDP pour service de tonalité CRT.

3. Procédé selon la revendication 1, dans lequel, la partie appelée ne transporte pas d'informations de protocole SDP dans la réponse temporaire, et lorsque le message de pré-accusé PRACK transporte une offre de protocole SDP pour service de tonalité CRT, le serveur AS de conversion marque tous les supports multimédias d'une réponse de protocole SDP pour service de tonalité CRT dans le message de réponse comme étant indisponibles ou inactifs, lors du renvoi d'un message de réponse du message de pré-accusé PRACK (611).

4. Procédé selon la revendication 1, dans lequel, lors de l'envoi du message de pré-accusé PRACK incluant uniquement la nouvelle offre de protocole SDP à la partie appelée, le serveur AS de conversion ajoute, à la nouvelle offre de protocole SDP, des informations de type de supports multimédias requises par une session entre la partie appelante et la partie appelée.

5. Procédé selon la revendication 1, dans lequel,
si le serveur AS de conversion ne trouve pas d'offre de protocole SDP pour une session normale dans un message de réponse reçu en provenance de la partie appelée, alors le serveur AS de conversion envoie une demande de provenance d'appel en utilisant un identifiant, ID, de dialogue existant sans protocole SDP à la partie appelée (514, 515) ;
la partie appelée envoie un message de réponse contenant une offre de protocole SDP de la partie appelée à la partie appelante (516) ; et suite à la réception du message de réponse, le serveur AS de conversion achemine un message de réponse contenant une offre de protocole SDP de la partie appelée vers la partie appelante (517).

6. Système destiné à mettre en oeuvre un service de tonalité d'appel en couleur, CRT, comprenant un serveur de tonalité CRT situé dans un réseau appelant, **caractérisé en ce que** le système comprend en outre un serveur d'application, AS, de conversion situé dans un réseau appelé, le serveur AS de conversion incluant un module d'ajout d'indications et un module de génération d'offres de protocole de description de session, SDP, dans lequel :
le module d'ajout d'indications est apte à ajouter une indication de prise en charge de protocole SDP pour service de tonalité CRT à une réponse temporaire après que le serveur AS de conversion reçoit la réponse temporaire en provenance de la partie appelée, en vue de répondre à une demande de provenance d'appel envoyée par la partie appelante, et à envoyer ensuite la réponse temporaire à la partie appelante ;
le serveur de tonalité CRT est apte à, suite à la réception du message de pré-accusé PRACK en provenance de la partie appelante en vue de répondre à la réponse temporaire, ajouter une offre de protocole SDP pour service de tonalité CRT au message de pré-accusé de réception PRACK selon l'indication de prise en charge de service de tonalité CRT transportée dans la demande de provenance d'appel, et à envoyer le message de pré-accusé PRACK à la partie appelée ;
le module de génération d'offres de protocole SDP est apte à, suite à la réception du message de pré-accusé PRACK envoyé par le serveur de tonalité CRT, générer une nouvelle offre de protocole SDP sur la base de l'offre de protocole SDP pour service de tonalité CRT, et à envoyer le message de pré-accusé PRACK incluant uniquement la nouvelle offre de protocole SDP à la partie appelée.

7. Système selon la revendication 6, dans lequel, le module de génération d'offres de protocole SDP est apte à générer une nouvelle offre de protocole SDP sur la base de l'offre de protocole SDP pour service de tonalité CRT de la manière suivante consistant à : mettre en oeuvre une modification de support multimédia correspondant sur l'offre de protocole SDP pour service de tonalité CRT selon un ordre de type de supports multimédias requis dans l'offre de protocole SDP pour une session normale, et à annexer des informations de support multimédia à la suite de celles dont l'offre de protocole SDP pour une session normale ne dispose pas, mais dont dispose l'offre de protocole SDP pour service de tonalité CRT.

8. Système selon la revendication 6, dans lequel, le module de génération d'offres de protocole SDP est apte à ajouter, à la nouvelle offre de protocole SDP, des informations de type de supports multimédias requises par une session entre la partie appelante et la partie appelée.

9. Système selon la revendication 6, dans lequel, si le serveur AS de conversion ne trouve pas d'offre de protocole SDP pour une session normale dans un message de réponse reçu en provenance de la partie appelée, alors le serveur AS de conversion est apte à envoyer une demande de provenance d'appel en utilisant un identifiant, ID, de dialogue existant sans protocole SDP, à la partie appelée.
